# EUROPÄISCHE PATENTSCHRIFT

(11) **EP 2 734 712 B1**
(45) Veröffentlichungstag und Bekanntmachung des Hinweises auf die Patenterteilung: **06.12.2017**
(21) Anmeldenummer: 12737795.0
(22) Anmeldetag: 18.07.2012
(51) Int. Cl.: F01L 1/047, B23P 11/02, B21D 53/84, F16H 53/02

(54) **NOCKENWELLE UND ZUGEHÖRIGES HERSTELLVERFAHREN**
CAMSHAFT AND CORRESPONDING PRODUCTION METHOD
ARBRE À CAMES ET PROCÉDÉ DE PRODUCTION CORRESPONDANT

(30) Priorität: 21.07.2011 DE 102011079582; 24.11.2011 DE 102011087049; 15.02.2012 DE 102012202301
(43) Veröffentlichungstag der Anmeldung: 28.05.2014
(73) Patentinhaber: Mahle International GmbH, 70376 Stuttgart (DE)
(72) Erfinder: LETTMANN, Markus, 75249 Kieselbronn (DE); RIEGER, Ralf, 71732 Tamm (DE); SCHNEIDER, Falk, 70825 Korntal-Münchingen (DE); GRUNWALD, Lutz, 14641 Wustermark (DE); MENONNA, Antonio, 71254 Ditzingen (DE); STEICHELE, Stefan, 70839 Gerlingen (DE)
(74) Vertreter: BRP Renaud & Partner mbB Rechtsanwälte Patentanwälte Steuerberater
(86) Internationale Anmeldenummer: PCT/EP2012/064111
(87) Internationale Veröffentlichungsnummer: WO 2013/011064

(56) Entgegenhaltungen:
- WO-A1-01/98020
- DE-A1- 3 431 361
- DE-A1-102006 001 769
- DE-A1-102009 060 352
- JP-A- 2000 045 717
- US-A1- 2010 059 002

## Beschreibung

Die vorliegende Erfindung betrifft eine Nockenwelle gemäß dem Oberbegriff des Anspruchs 1 sowie einen Nocken für eine derartige Nockenwelle. Die Erfindung betrifft weiter eine Vorrichtung und ein Verfahren zur Herstellung einer derartigen Nockenwelle bzw. eines derartigen Nockens.

Nockenwellen sind fester Bestandteil von Brennkraftmaschinen. Dabei weist die Nockenwelle eine (Leer-)Welle auf, auf der zumindest ein Nocken gefügt ist. Zum Fügen der Welle und der Nocken kommen dabei in der Regel thermische Fügeverfahren zum Einsatz. Dabei ist die Verbindung der Welle und des Nockens über eine nockenseitige Fügefläche, die in der Regel in einer Nockenbohrung angeordnet ist, und einer wellenseitigen Fügefläche gewährleistet. Nachteilig dabei ist, dass das über die Nockenwelle übertragbare Moment durch die Reibung zwischen der nockenseitigen Fügefläche und der wellenseitigen Fügefläche begrenzt ist.

Aus der DE 10 2009 060 352 A1 ist Verfahren zum Herstellen einer Nockenwelle zur Ventilsteuerung eines Verbrennungsmotors bekannt, umfassend die Schritte: Ausrichten einer Mehrzahl scheibenartiger Nocken mit je einem zentralen, runden, senkrecht zu einer Nockenhauptebene erstreckten Durchbruch derart, dass die Durchbrüche der axial beabstandet angeordneten Nocken miteinander fluchten. Unterkühlen einer Leerwelle runden Außenprofils relativ zu den Nocken, wobei der Außendurchmesser der unterkühlten Leerwelle kleiner und der Außendurchmesser der nicht unterkühlten Leerwelle größer als der Innendurchmesser der Nockendurchbrüche ist. Einschieben der unterkühlten Leerwelle in die fluchtenden Nockendurchbrüche. Herbeiführen eines Temperaturausgleichs zwischen der Leerwelle und den Nocken, sodass die Leerwelle und die Nocken fest zu einer Nockenwelle verbunden werden, wobei die Innenflächen der Nockendurchbrüche und/oder die Außenfläche der Leerwelle in ihren im eingeschobenen Zustand von den Nockendurchbrüchen umgriffenen Abschnitten ein mittels Laserablation erzeugtes Raumuster aufweisen.
Die vorliegende Erfindung beschäftigt sich insbesondere mit dem Problem, für eine gattungsgemäße Nockenwelle eine verbesserte oder zumindest alternative Ausführungsform anzugeben, die sich insbesondere durch einen geringeren Herstellungsaufwand auszeichnet.
Dieses Problem wird erfindungsgemäß durch die Gegenstände der unabhängigen Ansprüche gelöst. Vorteilhafte Ausführungsformen sind Gegenstand der abhängigen Ansprüche.
Die vorliegende Erfindung beruht auf dem allgemeinen Gedanken, eine Verbindung zwischen einem Bauteil und einer Nockenwelle neben einem thermischen Fügen zusätzlich durch eine partielle Aufrauung einer bauteilseitigen Fügefläche und/oder einer wellenseitigen Fügefläche zu unterstützen. Alternativ kann der Nocken mittels Presssitz mit der Nockenwelle verbunden sein. Erfindungsgemäß sind dabei die bauteilseitige Fügefläche und/oder die wellenseitige Fügefläche ausschließlich an belastungskritischen Bereichen aufgeraut bzw. besitzen dort eine vordefinierte Rauheit, die zudem mittels Laser eingebracht sein kann. Selbstverständlich ist alternativ zum Laser auch ein Strahlen oder chemisches Behandeln der entsprechenden aufzurauenden Bereiche vorstellbar. Durch die lediglich partielle Aufrauung der bauteilseitigen und/oder der wellenseitigen Fügefläche an den jeweils belastungskritischen Bereichen können der Aufwand zum Aufrauen und damit die Taktzeit deutlich reduziert und dadurch wiederum die Montage der Nockenwelle beschleunigt werden. Die Reduzierung der Taktzeit liegt insbesondere darin begründet, dass nunmehr nicht mehr die gesamte Fügefläche aufgeraut, das heißt beispielsweise gelasert, werden muss, sondern lediglich noch Teilflächen der Fügefläche(n), wodurch der Aufrauprozess an sich gestrafft und dadurch wiederum die Taktzeit verkürzt werden können. Das mit der Nockenwelle gefügte Bauteil ist erfindungsgemäß als Nocken ausgebildet. Für die gesamte Anmeldung gilt daher, dass der Begriff "Nocken" stets dem Begriff "Bauteil" entspricht. Bei einer vorteilhaften Weiterbildung der erfindungsgemäßen Lösung beträgt die vordefinierte Rauheit ca. 2-25 Rz. Durch eine genaue Einstellung der Rauheit ist auch die genaue Einstellung eines übertragbaren Drehmoments möglich. Zugleich kann die Haltezeit des erwärmten Nockens durch die Aufrauung und damit auch die Taktzeit reduziert werden.
Zweckmäßig sind die nockenseitige Fügefläche und/oder die wellenseitige Fügefläche im Bereich des zugehörigen Nockenerhebungsbereichs und/oder des gegenüberliegenden Grundkreises aufgeraut, wobei sich die Rauheit im Bereich der Nockenerhebung über einen Umfangswinkel von ca. 20-140° und im gegenüberliegenden Bereich über einen Umfangswinkel von ca. 20-140° erstreckt. Insbesondere im Bereich der Nockenerhebung, das heißt im Bereich der Nockenspitze ist mit einer erhöhten Normalkraft zu rechnen, so dass das Aufbringen einer vordefinierten Rauheit in genau diesen Stellen eine hohe Drehmomentübertragung zuverlässig gewährleistet.

Bei einer zusätzlichen oder alternativen Ausführungsform kann vorgesehen sein, dass die nockenseitige Fügefläche und/oder die wellenseitige Fügefläche zumindest partiell ringförmig an zwei voneinander beabstandeten Axialrändern aufgeraut ist. In diesem Fall wird somit lediglich der jeweilige Randbereich der bauteil- bzw. wellenseitigen Fügefläche aufgeraut, das heißt insbesondere gelasert, wobei in genau diesen Bereichen die höchsten Pressungen auftreten und dadurch wiederum hohe Normalkräfte zur Übertragung von hohen Momenten führen. Durch die lediglich partielle Aufrauung kann der Aufrauvorgang an sich deutlich schneller ablaufen, wodurch wiederum eine Reduzierung der Taktzeit möglich ist. Selbstverständlich ist dabei auch denkbar, dass unterschiedlichste Bereiche der jeweiligen Fügeflächen unterschiedlichste Rauheitswerte aufweisen, wobei darüber hinaus vorstellbar ist, dass ein Grad der vordefinierten Rauheit an einen jeweiligen Belastungsgrad im Bereich dieser Fläche angepasst ist, so dass in Bereichen höherer Belastungen eine höhere Rauheit vorgesehen wird.

Zweckmäßig weist die mittels Laser eingebrachte, partielle Rauheit Bearbeitungsspuren auf, die parallel, quer oder schräg zur Nockenwellenachse ausgerichtet sind. Insbesondere bei einer parallelen Ausrichtung der Bearbeitungsspuren der vordefinierten Rauheit in Bezug auf die Nockenwellenachse kann ein erleichtertes Aufschieben auf den nunmehr aufgerauten und durch den Laserstrahl zugleich auch gehärteten Bearbeitungsspuren erfolgen, wobei zugleich auch die Verwendung einer rohen, das heißt unbearbeiteten Nockenwelle bzw. allgemein Welle denkbar ist. Trotz dem besseren Fügen in axialer Richtung können so hohe Drehmomente zwischen Nocken und Welle übertragen werden, da sich bei der Drehmomentübertragung die Beanspruchungsrichtung ändert. Durch das Lasern kann dabei eine vergleichsweise harte Körnung im Bereich der Rauheit erzielt werden, was bei insbesondere weicheren Bauteilen oder Wellen zu einer härteren Oberflächenstruktur führt, die wiederum zur Übertragung von höheren Drehmomenten ausgelegt ist. Die härtere Oberflächenstruktur kann dabei durch ein vergleichsweise schnelles Abkühlen nach dem Lasern zusätzlich unterstützt werden.

Durch eine definierte Laserleistung kann dabei eine definierte Rauheit und darüber ein definiertes übertragbares Drehmoment erzeugt werden. Zusätzlich zur Variation bzw. Beeinflussung der Laserleistung ist auch ein mehrmaliges Lasern bzw. einer Bearbeitungsspur bzw. eines Bearbeitungsbereichs denkbar, wodurch die gewünschte Härte besonders exakt einstellbar ist. Über die Bearbeitungsspuren können dabei grundsätzlich auch Bearbeitungsmuster, bspw. Karo, Rauten, Rechteckmuster, etc. erzeugt werden.

Bei einer vorteilhaften Weiterbildung der erfindungsgemäßen Lösung sind die Bauteile mittels thermischen Fügesitz mit der Nockenwelle verbunden, wobei die Nocken erwärmt werden. Bei herkömmlichen thermischen Fügesitzen wird üblicherweise die Welle gekühlt und/oder der Nocken bzw. das Bauteil erwärmt. Im vorliegenden Fall hingegen werden ausschließlich die Bauteile, das heißt die Nocken, erwärmt und dann über die zugehörige Welle bzw. Nockenwelle geschoben. Selbstverständlich ist auch ausschließlich ein Presssitz ohne thermische Vorbehandlung vorstellbar.

Die vorliegende Erfindung beruht weiter auf dem allgemeinen Gedanken, eine Vorrichtung zur Herstellung einer Nockenwelle mit einer Welle und zumindest einem, insbesondere thermisch gefügten Nocken anzugeben, wobei der Nocken über eine nockenseitige Fügefläche mit der wellenseitigen Fügefläche verbunden ist. Die erfindungsgemäße Vorrichtung besitzt dabei eine Vorschubeinrichtung zum Verschieben der Welle, sowie eine Halte- und Heizvorrichtung zum Erwärmen des Nockens und zum Fixieren desselben während des Montagevorgangs. Zusätzlich vorgesehen ist ein Laser zum Einbringen der partiellen Rauheit in die nockenseitige Fügefläche und/oder die wellenseitige Fügefläche unmittelbar vor dem Aufschieben der Nocken. Denkbar ist hierbei beispielsweise, dass die Welle um etwas mehr als eine Fügebreite, das heißt im vorliegenden Fall um etwas mehr als eine Nockenbreite, verschoben wird, wobei zuvor sämtliche Bauteile und insbesondere Nocken auf die Nockenwelle aufgefädelt wurde. Dann werden sämtliche Fügepositionen an der Welle, das heißt sämtliche wellenseitigen Fügeflächen gelasert und anschließend die Nocken auf die Fügeflächen an der Welle geschoben bzw. umgekehrt. Hierdurch kann vermieden werden, dass die Nocken unbeabsichtigter Weise weitere wellenseitige Fügeflächen überfahren.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Dabei zeigen, jeweils schematisch:
- Fig. 1: eine erfindungsgemäße Nockenwelle sowie einen zugehörigen Nocken mit ringförmig an zwei voneinander beabstandeten Axialrändern eingebrachter, vordefinierter Rauheit,
- Fig. 2: eine Darstellung ähnlich wie in Fig. 1, jedoch mit anders angeordneter, partieller Rauheit,
- Fig. 3: wiederum unterschiedlichste mögliche Ausführungsformen der die Drehmomentübertragungsfähigkeit erhöhende Rauheit,
- Fig. 4: eine Ansicht auf eine erfindungsgemäße Nockenwelle mit Längsbearbeitungsspuren zum Gleiten der Nocken sowie zur Drehmomentübertragung,
- Fig. 5a-5c: unterschiedliche Verfahrensschritte zur Herstellung der erfindungsgemäßen Nockenwelle,
- Fig. 6: ein weiteres mögliches Anwendungsgebiet der Erfindung,
- Fig. 7: eine mittels Laser eingebrachte und gehärtete Rauheit, die aus einzelnen Laserpunkten zusammengesetzte Spuren aufweist, wobei die Mittelpunkte der einzelnen Laserpunkte versetzt zueinander und die einzelnen Laserpunkte einander überlagernd angeordnet sind,
- Fig. 8: eine Darstellung wie in Fig. 8, jedoch mit parallel zu den Spuren verlaufender Drehrichtung,
- Fig. 9: eine mikroskopische Detaildarstellung bei einer weiteren möglichen Ausführungsform der Spuren, aus Fig. 8,
- Fig. 10: eine mikroskopische Schnittdarstellung durch einen Laserpunkt der Rauheit.

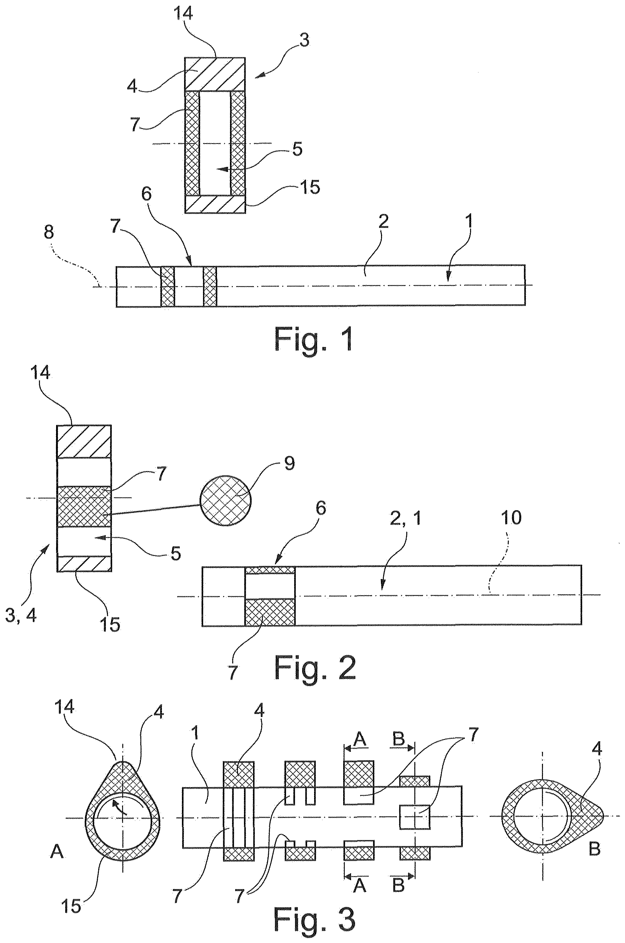

Entsprechend den Figuren 1 und 2, weist eine erfindungsgemäße Nockenwelle 1 für eine im Übrigen nicht gezeigte Brennkraftmaschine eine Welle 2 sowie zumindest ein, insbesondere thermisch damit gefügtes Bauteil 3, hier einen Nocken 4, auf, das über eine bauteilseitige Fügefläche 5 mit einer wellenseitigen Fügefläche 6 verbunden werden kann. Erfindungsgemäß weist nun die bauteilseitige Fügefläche 5 und/oder die wellenseitige Führungsfläche 7 ausschließlich partiell an belastungskritischen Bereichen, das heißt beispielsweise im Bereich eines Nockenerhebungsbereichs oder eines gegenüberliegenden Grundkreises, eine vordefinierte Rauheit 7 auf, die insbesondere mittels eines Lasers eingebracht ist. Die vordefinierte Rauheit 7 kann dabei zwischen 2-25 Rz betragen.

Generell kann das Bauteil 3 wie im vorliegenden Fall als Nocken 4 ausgebildet sein, wobei es selbstverständlich auch vorstellbar ist, dass dieses beispielsweise als Signalgeberrad, als Stopfen, als Lagerring, als Ketten-/Riemenrad, als Zahnrad, als Antriebs- bzw. Abtriebselement, als Werkzeugschnittstelle, als Einstellelement, als Ausrichteelement, als Montagehilfselement oder als Hülse ausgebildet ist. Die nockenseitige Fügefläche 5 und/oder die wellenseitige Fügefläche 6 sind vorzugsweise wie zuvor genannt im Bereich der zugehörigen Nockenerhebung, das heißt einer Nockenspitze und/oder des gegenüberliegenden Grundkreises aufgeraut, wobei sich die Rauheit 7 im Bereich der Nockenerhebung über einen Umfangswinkel von ca. 20-140°, bevorzugt von ca. 50-120°, und im gegenüberliegenden Bereich des Grundkreises über einen Umfangswinkel von ca. 20-140°, bevorzugt von ca. 20-90° erstreckt.

Betrachtet man dabei die Fügeflächen 5 und 6 gemäß der Figur 1, so kann man erkennen, dass diese umlaufend ringförmig an zwei voneinander beabstandeten Axialrändern aufgeraut sind. Alternativ kann selbstverständlich auch eine sich über die gesamte axiale Breite des Nockens 4 erstreckende Rauheit 7 vorgesehen werden, wie dies beispielsweise gemäß den Figuren 2 und 3 dargestellt ist. In diesem Fall aber ist ebenfalls nicht die gesamte Fügefläche 5 bzw. 6 aufgeraut, sondern lediglich ein bestimmter Bereich derselben. Betrachtet man beispielsweise die Figur 3, so kann man erkennen, dass die Rauheit 7 in der ganz linken Darstellung ringförmig ausgebildet ist, wie gemäß der Figur 1, wobei gemäß der zweiten Darstellung in Figur 3 diese Ringe im Bereich eines Äquators unterbrochen sind.

Ein Verbinden der Nocken 4 mit der Nockenwelle 1 bzw. generell der Bauteile 3 mit der Welle 2 kann über einen einfachen Presssitz oder aber über einen thermischen Fügesitz erfolgen, wobei dann die Nocken 4, das heißt die Bauteile 3 zuvor erwärmt werden. Das Aufrauen beispielsweise lediglich in den axialen Randbereichen bietet den Vorteil, dass dort die höchsten Pressungen, beispielsweise auch hervorgerufen durch eine Verkantung, auftreten und somit dort die größten Drehmomente übertragen werden. Sämtliche benutzten Wellen 2 bzw. Nockenwellen 1 können dabei fertig bearbeitet oder aber roh sein.

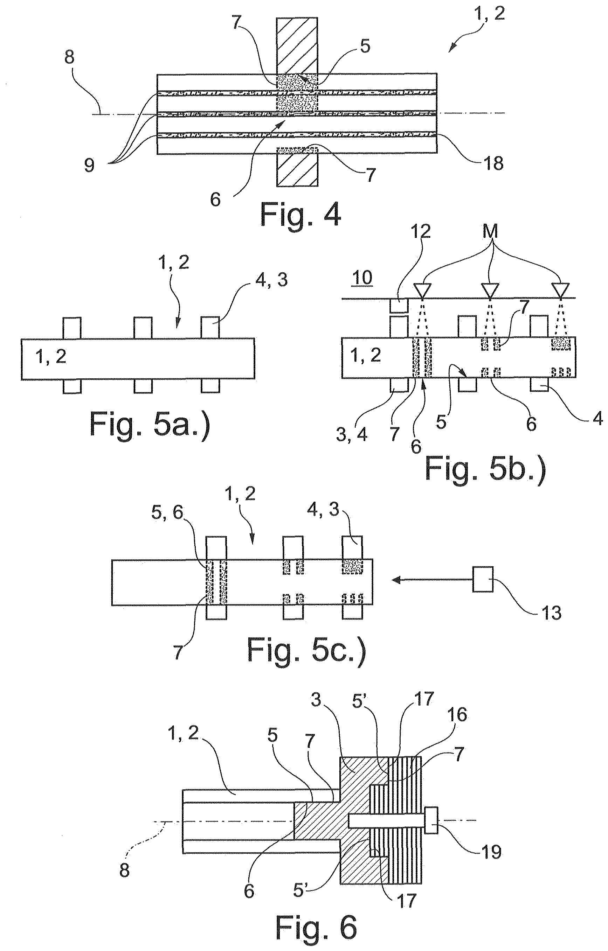

Betrachtet man die Figur 4, so kann man dort parallel zur Nockenwellenachse 8 aufgeraute Bearbeitungsspuren 9 erkennen, auf welchen die Nocken 4 entlang geschoben werden. Trotzdem sind zusätzlich die wellenseitige Fügefläche 6 und/oder die bauteilseitige Fügefläche 5 mit einer vordefinierten Rauheit 7 versehen, die zur Übertragung der Drehmomente benötigt wird. Gemäß der Figur 4 verlaufen dabei die Bearbeitungsspuren 9 parallel zur Nockenwellenachse 8, wobei selbstverständlich die Bearbeitungsspuren 9 auch schräg dazu verlaufen können oder aber die Rauheit 7 im Bereich der Fügeflächen 5, 6 entsprechende Bearbeitungsspuren 9 aufweisen, die parallel, quer oder schräg zur Nockenwellenachse 8 verlaufen. Die Bearbeitungsspuren 9 können darüber hinaus auch als Gleitspuren (18) ausgebildet sein und zudem als Ölhaltereservoir dienen. Hierbei kann dann eine Halbwelle, das heißt insbesondere eine nicht geschliffene oder unbearbeitete Welle verwendet werden. Es können auch an der bauteilseitigen Fügefläche 5 und/oder an der wellenseitigen Fügefläche 7 achsparallele Bearbeitungsspuren zur Montageerleichterung eingebracht sein. Das Aufschieben der Nocken 4 auf die Nockenwelle 1 erfolgt in diesem Fall mittels Presskraft, wobei jedoch die Rauheiten 7 im Bereich der späteren Fügeflächen 5, 6 die Drehmomentübertragung garantieren.

Generell kann das Bauteil 3 als Nocken 4 ausgebildet sein und eine als Nockensitz ausgebildete und innengedrehte Fügefläche 5 aufweisen, denen die Rauheit 7 in Form von Laserstrukturen überlagert ist. Gedrehte Nockeninnensitze haben in Umfangsrichtung orientierte Drehspuren (Drehpass) mit in Grenzen einstellbarer Tiefe, Breite, etc.. Wird auf solche eine spanend hergestellte Grundstruktur noch zusätzlich eine Laserstruktur mit Streifen/ Bearbeitungsspuren 9 quer (Winkel 0...90° relativ zum Drehpass) zu dem Drehpass eingebracht, entsteht ein Karo / Rauten / Rechteckmuster mit vielen Spitzen im Profil (vgl. Detaildarstellung in Fig. 2). Variiert werden können dabei ein Winkel zum Drehpass, ein Abstand der Bearbeitungsspuren 9, eine Tiefe derselben. Generell ermöglich ein derartiges Profil bei der Montage des Nockens 4 eine deutlich verbesserte Drehmomentübertragung. Da die eigentliche Kontaktfläche kleiner wird, erhöht sich die Flächenpressung im Pressverband. Die spitzen Strukturen "verhaken" sich besser mit der Rauheit 7 der Nockenwellenoberfläche.

Betrachtet man die Fig. 6, so kann man erkennen, dass am Bauteil 3 ein Bauelement 16 angebunden ist, wobei am Bauteil 3 bauteilseitige Fügeflächen 5' und/oder am Bauelement 16 bauelementseitige Fügeflächen 17 angeordnet sind, die bei am Bauteil 3 angebundenem Bauelement 16 miteinander in Kontakt stehen und wobei die bauteilseitige Fügefläche 5' und/oder die bauelementseitige Fügefläche 17 zumindest oder ausschließlich partiell an belastungskritischen Bereichen eine vordefinierte Rauheit 7 aufweisen/aufweist. Das Bauelement 16 und das Bauteil 3 können über eine Schraubverbindung 19 miteinander verbunden sein. Die bauteilseitige Fügeflächen 5,5' und/oder die wellenseitige Fügefläche 6 und/oder die bauelementseitige Fügefläche 17 können dabei stirnseitig oder umfangsseitig an der jeweiligen Komponente 2, 3, 16 angeordnet sein.

In der Figur 5a-c ist dabei prinzipiell das Verfahren zur Montage der Nocken 4 auf der zugehörigen Nockenwelle 1 dargestellt: zunächst werden im ersten Verfahrensschritt, das heißt gemäß der Figur 5a, die Nocken 4 auf die Nockenwelle 1 oder generell auf die Welle 2 aufgeschoben bzw. hierfür zuvor mittels einer Halte- und Heizvorrichtung 12 (vgl. Figur 5b) erwärmt. Im Verfahrensschritt gemäß der Figur 5b werden dann die vordefinierte Rauheit 7 im Bereich der späteren wellenseitigen Fügefläche 6 mittels einem in einer entsprechenden Vorrichtung 10 zur Herstellung der Nockenwelle 1 angeordneten Laser 11 eingebracht. Im Verfahrensschritt gemäß der Figur 5c wird anschließend die Nockenwelle 1 bzw. allgemein die Welle 2 mittels einer Vorschubeinrichtung 13 so verschoben, dass die Nocken 4 bzw. allgemein die Bauteile 3 mit ihren bauteilseitigen Fügeflächen 5 über die wellenseitigen Fügeflächen 6 gelangen.

Generell können dabei die Rauheit 7 an einem oder an beiden Reibpartnern, das heißt sowohl am Bauteil 3 als auch an der Welle 2 angeordnet werden, wobei denkbar ist, dass dabei gleiche oder unterschiedliche Rauheiten 7 eingebracht werden. Dies kann beispielsweise durch Lasern mit unterschiedlicher Laserleistung oder aber unterschiedlichen chemischen Behandlungsverfahren bzw. unterschiedlichen Strahlverfahren, beispielsweise mit unterschiedlichem Strahlgut, wie beispielsweise Stahl, Glas oder Korund, erfolgen.

Mittels der mittels des Lasers 11 erzeugten Rauheit 7 lässt sich jedoch nicht nur diese aufbringen, sondern generell auch die Welle 2 bzw. respektive die Nockenwelle 1 reinigen. Durch das Lasern wird eine Mikrohärte erzeugt, die bei insbesondere weicheren Wellen 2 oder Bauteilen 3 eine härtere Oberflächenstruktur hervorruft, mittels welcher dann wiederum ein höheres Drehmoment übertragen werden kann. Die höhere Mikrohärte kann beispielsweise durch ein schnelles Abkühlen begünstigt werden.

Generell kann das Bauteil 3, insbesondere der Nocken 4, aus einem Metall mit einem Kohlenstoffanteil von zumindest 0,6 Gew.-% ausgebildet ist, wogegen die Welle 2 einen geringeren Kohlenstoffanteil aufweist. Als Werkstoffe für den Nocken 4 bzw. generell das Bauteil 3, kommen insbesondere gut härtbare Stähle, wie zum Beispiel 100Cr6, C60, C45 oder Sintermaterialien, wie z.B. A1100, 1200, 1300, 1500 oder Gussmaterialien, wie EN GJL 250 oder EN GJS 700 in Frage. Generell können auch luftgehärtete Stähle für die Bauteile 3 verwendet werden. Für die Welle 2 hingegen kommen insbesondere kohlenstoffarme Stähle wie E335 und C60E in Betracht.

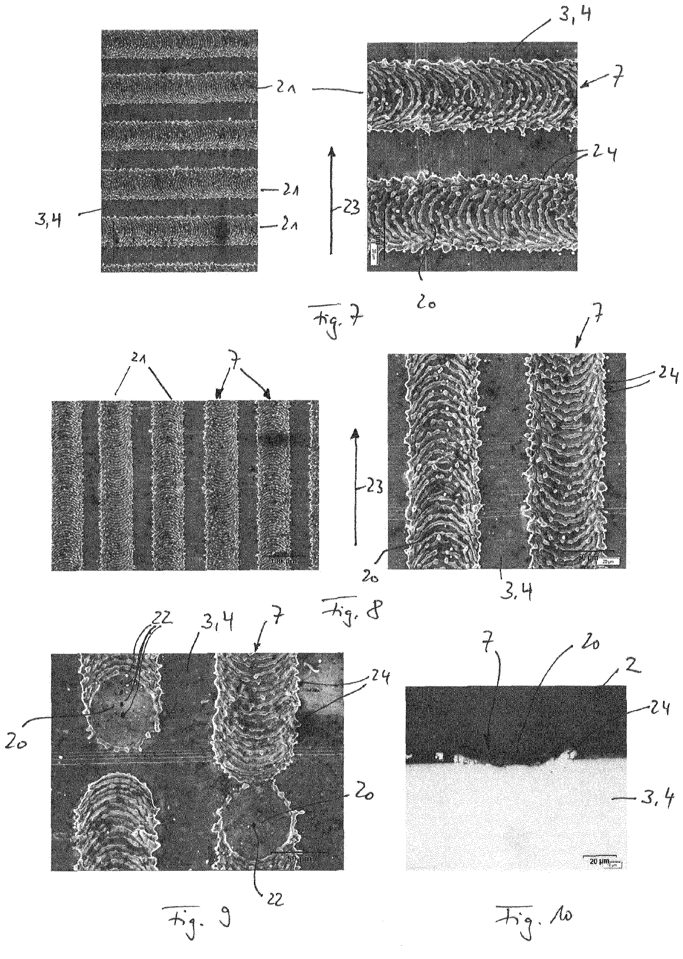

Um die Drehmomentübertragungsfähigkeit steigern zu können, kann die bauteilseitige Fügefläche 5,5' und/oder die bauelementseitige Fügefläche 17 eine mittels Laser 11 eingebrachte und gehärtete Rauheit 7 aufweisen, die insbesondere mehrere aus einzelnen Laserpunkten 20 zusammengesetzte Spuren 21 aufweist, wobei die Mittelpunkte 22 der einzelnen Laserpunkte 20 versetzt zueinander und die einzelnen Laserpunkte 20 einander überlagernd angeordnet sind, wie dies gemäß den Fig. 7 bis 9 dargestellt ist. Selbstverständlich ist auch denkbar, dass die wellenseitige Fügefläche 6 eine derartige mittels Laser 11 eingebrachte und gehärtete Rauheit 7 aufweist, wobei die Welle 2 in diesem Fall vor dem Einbringen der Rauheit 7 mittels des Lasers 11 gehärtet ist.

In Fig. 7 verläuft dabei eine Verdrehrichtung 23 der Welle 2 orthogonal zur Richtung der Spuren 21, wobei in diesem Fall insbesondere Ränder/Kanten 24 der Spuren 21 die maximal möglichen Verdrehmomente beeinflussen. Demgegenüber verläuft in Fig. 8 die Verdrehrichtung 23 der Welle 2 parallel zur Richtung der Spuren 21, wodurch ein noch größerer Widerstand gegen ein Rutschen und damit eine noch größere Drehmomentübertragungsfähigkeit erreichbar sind. Die Drehmomentübertragungsfähigkeit und damit der Widerstand gegen ein Verrutschen zwischen Welle 2 und Bauteil 3 werden dabei von einem beim Laserpunktieren aufgeworfenen Rand 24 (vgl. Fig. 7-10) beeinflusst, der üblicherweise am Bauteil 3 bzw. am Nocken 4 angeordnet ist und sich beim Fügen mit der Welle 2 in diese eingräbt. Das Eingraben ist durch den im Vergleich zum Werkstoff des Bauteils 3 weicheren Werkstoff der Welle 2 möglich.

In den Fig. 7-10 sind die Rauheit 7, beispielsweise die Laserpunkte 20, immer im Bauteil 3 bzw. Nocken 4 eingebracht, wobei selbstverständlich auch ein Laserpunktieren der Welle 2 und damit ein Erzeugen von Rändern 24 an der Welle 2 denkbar ist, wobei hierzu die Welle 2 zunächst eine Aufkohlung erfahren muss, um dann bei Laserpunktieren gehärtet werden zu können. Dies hat insbesondere den Vorteil, dass lediglich ein einziges Bauteil, nämlich die Welle 2 bearbeitet werden muss und nicht eine Vielzahl von Bauteilen 3 bzw. Nocken 4.

Generell kann ein Verdrehmoment beim Laserpunktieren und vorherigem Aufkohlen der Welle 2 von ca. 135 auf 225 Nm und beim Laserpunktieren des Bauteils 3 sogar auf 325 Nm gesteigert werden, was einer Steigerung um über 100% entspricht. Unter dem Verdrehmoment wird dabei dasjenige Moment verstanden, bei welchem das Bauteil 3 an der Welle 2 zu rutschen beginnt.

Das Laserstrukturieren vom Nockensitz (wellen- und/oder nockenseitig) ist momentan die für die Zukunft wahrscheinlich beste Methode um deutliche Steigerungen des Verdrehmoments bei thermisch gefügten Nocken 4 auf der Welle 2 zu erzielen. Bei den weiteren Untersuchungen wurde der Fokus auf die Verbesserung der Wirtschaftlichkeit bei gleichzeitiger Steigerung des Verdrehmoments gesetzt. Es hat sich gezeigt, dass ein höheres Verdrehmoment erzielt werden kann, wenn nur der Nocken 4 mittels Laser 11 strukturiert wird. Wird die Welle 2 strukturiert und der Nocken 4 nicht, wird zwar ein im Vergleich zum bisherigen reinen thermischen Fügen erhöhtes, aber kein so hohes Verdrehmoment erreicht wie beim Laserstrukturieren des Nockens 4. Dies ist auf die verwendete Materialpaarung Nocken/Welle zurückzuführen. Als Werkstoff für die Nocken 4 sollte ein kohlenstoffreicher Stahl (z.B. c60 oder 100Cr6) zum Einsatz kommen, da sich dieser aufgrund des höheren Kohlenstoffanteils besser härten lässt als der für die Welle 2 verwendete E 335 Stahl. Beim Laserstrukturieren wird lokal eine hohe Energiemenge eingebracht, die zu einer Mikrohärte genau in dem Bereich der aufgeworfenen Strukturen, das heißt insbesondere der Ränder 24 sorgt. Aus diesem Grund graben sich die beim Strukturieren entstehenden Ränder 24 (Aufwürfe) beim Nocken 4 stärker in die Welle 2 ein, als es anders herum der Fall wäre.

Des Weiteren hat sich gezeigt, dass einzelne Laserpunkte 20 oder Laserpunkte 20, die sich teilweise überlappen (vgl. Fig. 7-9), ebenfalls zu einer Erhöhung des Verdrehmoments führen, da hierdurch im Vergleich zu einer durchgängigen "Laserspur" mehr Widerhakenstrukturen auf der Oberfläche gebildet werden können, die sich dann in die Gegenfläche eingraben können.

## Patentansprüche

1. Nockenwelle (1) für eine Brennkraftmaschine mit einer Welle (2) und zumindest einem thermisch oder mittels Presssitz damit gefügten Bauteil (3), das über eine bauteilseitige Fügefläche (5) mit einer wellenseitigen Fügefläche (6) verbunden ist, wobei das zumindest eine Bauteil (3) als Nocken (4) ausgebildet ist,
**dadurch gekennzeichnet, dass**
- die bauteilseitige Fügefläche (5) und/oder die wellenseitige Fügefläche (6) ausschließlich an belastungskritischen Bereichen partiell eine vordefinierte Rauheit (7) aufweisen/aufweist,
- die belastungskritischen Bereiche diejenigen Bereiche sind, auf die zur Übertragung von Drehmomenten zwischen dem Bauteil (3) und der Welle (2) erhöhte Normalkräfte wirken.

2. Nockenwelle nach Anspruch 1,
**dadurch gekennzeichnet,**
- **dass** die vordefinierte Rauheit (7) ca. 2 bis 25 Rz beträgt, und/oder
- **dass** die Rauheit mittels Laser, mechanisch oder mittels chemischem Verfahren eingebracht ist.

3. Nockenwelle nach Anspruch 1 oder 2,
**dadurch gekennzeichnet,**
**dass** die nockenseitige Fügefläche (5) und/oder die wellenseitige Fügefläche (6) im Bereich einer zugehörigen Nockenerhebung (14) aufgeraut sind.

4. Nockenwelle nach Anspruch 3,
**dadurch gekennzeichnet,**
**dass** sich die Rauheit (7) im Bereich der Nockenerhebung (14) über einen Umfangswinkel von ca. 20° bis 140° und im gegenüberliegenden Bereich über einen Umfangswinkel von ca. 20° bis 140° erstreckt.

5. Nockenwelle nach einem der Ansprüche 1 bis 4,
**dadurch gekennzeichnet,**
**dass** die bauseitige Fügefläche (5) und/oder die wellenseitige Fügefläche (6) zumindest partiell, ringförmig an zwei voneinander beabstandeten Axialrändern aufgeraut ist.

6. Nockenwelle nach einem der Ansprüche 2 bis 5,
**dadurch gekennzeichnet,**
- **dass** insbesondere die mittels Laser eingebrachte partielle Rauheit (7) Bearbeitungsspuren (9) aufweist, die parallel, quer oder schräg zur Nockenwellenachse (8) ausgerichtet sind, und/oder
- **dass** die bauteilseitige Fügefläche (5) und die wellenseitige Fügefläche (6) eine unterschiedliche Rauheit (7) aufweisen, insbesondere hervorgerufen durch eine unterschiedliche Laserleistung.

7. Nockenwelle nach Anspruch 6,
**dadurch gekennzeichnet,**
**dass** die Bearbeitungsspuren (9) ein Bearbeitungsmuster, insbesondere ein Karomuster, ein Rautenmuster, ein Rechteckmuster, o.ä. bilden, wobei die einzelnen Bearbeitungsspuren (9) in einem Winkel von 0-90° zu Nockenwellenachse (8) angeordnet sind.

8. Nockenwelle nach einem der vorhergehenden Ansprüche,
**dadurch gekennzeichnet,**
**dass** der zumindest eine Nocken (4) mittels thermischem Fügesitz mit der Nockenwelle (1) verbunden ist, wobei der Nocken (4) erwärmt wird.

9. Nockenwelle nach einem der vorhergehenden Ansprüche,
**dadurch gekennzeichnet,**
**dass** am Bauteil (3) ein Bauelement (16) angebunden ist, wobei am Bauteil (3) bauteilseitige Fügeflächen (5') und am Bauelement (16) bauelementseitige Fügeflächen (17) angeordnet sind, die bei am Bauteil (3) angebundenem Bauelement (16) miteinander in Kontakt stehen und wobei die bauteilseitige Fügefläche (5') und/oder die bauelementseitige Fügefläche (17) zumindest oder ausschließlich partiell an belastungskritischen Bereichen eine vordefinierte Rauheit (7) aufweisen/aufweist.

10. Nockenwelle nach Anspruch 9,
**dadurch gekennzeichnet,**
**dass** das Bauelement (16) und das Bauteil (3) über eine Schraubverbindung (19) miteinander verbunden sind.

11. Nockenwelle nach Anspruch 9 oder 10,
**dadurch gekennzeichnet,**
**dass** die bauteilseitige Fügeflächen (5,5') und/oder die wellenseitige Fügefläche (6) und/oder die bauelementseitige Fügefläche (17) stirnseitig oder umfangsseitig an der jeweiligen Komponente angeordnet ist.

12. Nockenwelle nach einem der vorhergehenden Ansprüche, insbesondere nach einem der Ansprüche 9 bis 11,
**dadurch gekennzeichnet,**
- **dass** der Nocken (4), aus einem Metall mit einem Kohlenstoffanteil von zumindest 0,6 Gew.-% ausgebildet ist, wogegen die Welle (2) einen geringeren Kohlenstoffanteil aufweist,
- **dass** die bauteilseitige Fügefläche (5,5') und/oder die bauelementseitige Fügefläche (17) und/oder die wellenseitige Fügefläche (6) eine mittels Laser (11) eingebrachte und gehärtete Rauheit (7) aufweisen, wobei die Welle (2) vor dem Einbringen der Rauheit (7) mittels des Lasers (11) gehärtet ist.

13. Nockenwelle nach Anspruch 12,
**dadurch gekennzeichnet,**
- **dass** die mittels Laser (11) eingebrachte und gehärtete Rauheit (7) eine aus einzelnen Laserpunkten (20) zusammengesetzte Spur (21) aufweist, wobei die Mittelpunkte (22) der einzelnen Laserpunkte (20) versetzt zueinander und die einzelnen Laserpunkte (20) einander überlagernd angeordnet sind, und/oder
- **dass** die Welle (2) aus E335-Stahl und die Nocken (4) aus C60 bzw. 100Cr6 Stahl ausgebildet sind.

14. Nocken (4) für eine Nockenwelle (1), nach einem der Ansprüche 1 bis 13.

15. Bauteil nach Anspruch 14,
**dadurch gekennzeichnet,**
- **dass** an der bauteilseitigen Fügefläche (5) und/oder an der wellenseitigen Fügefläche (7) achsparallele Bearbeitungsspuren (9) in der Art von gehärteten Gleitspuren (18) zur Montageerleichterung eingebracht sind, und/oder
- **dass** die Nocken (4) und die bauteilseitigen Fügeflächen (5) als innen gedrehte Nockensitze ausgebildet sind, denen Bearbeitungsspuren (9) in der Art von Laserstrukturen überlagert sind.

16. Vorrichtung (10) zur Herstellung einer Nockenwelle (1) mit einer Welle (2) und zumindest einem thermisch oder mittels Presssitz damit gefügten Nocken (4), der über eine nockenseitige Fügefläche (5) mit einer wellenseitigen Fügefläche (6) verbunden ist, mit
- einer Vorschubeinrichtung (13) zum Verschieben der Welle (2),
- einer Halte- und Heizvorrichtung (12) zum Erwärmen des Nockens (4) und zum Fixieren desselben während des Montagevorgangs,
**gekennzeichnet durch**,
- einen Laser (11) zum Einbringen einer partiellen Rauheit (7) in einem belastungskritischen Bereich der nockenseitigen Fügefläche (5) und/oder der wellenseitigen Fügefläche (6) unmittelbar vor dem Aufschieben der Nocken (4), wobei die belastungskritischen Bereiche diejenigen Bereiche sind, auf die zur Übertragung von Drehmomenten zwischen dem Bauteil (3) und der Welle (2) erhöhte Normalkräfte wirken.

17. Verfahren zur Herstellung einer Nockenwelle (1) mit einer Welle (2) und zumindest einem thermisch oder mittels Presssitz damit gefügten Nocken (4), der über eine nockenseitige Fügefläche (5) mit einer wellenseitigen Fügefläche (7) verbunden ist, bei dem
- eine Vorschubeinrichtung (13) die Welle (2) verschiebt,
- eine Halte- und Heizvorrichtung (12) den Nocken (4) vorab erwärmt und während des Montagevorgangs fixiert,
**dadurch gekennzeichnet,**
**dass** ein Laser (11) eine partielle Rauheit (7) in einen belastungskritischen Bereich der nockenseitigen Fügefläche (5) und/oder der wellenseitigen Fügefläche (7) unmittelbar vor dem Aufschieben der Nocken (4) einbringt, wobei die belastungskritischen Bereiche diejenigen Bereiche sind, auf die zur Übertragung von Drehmomenten zwischen dem Bauteil (3) und der Welle (2) erhöhte Normalkräfte wirken.

## Claims

1. Camshaft (1) for an internal combustion engine with a shaft (2) and at least one component (3) joined thereto thermally or by means of a press fit, which is connected via a component-side joining surface (5) to a shaft-side joining surface (6), wherein the at least one component (3) is formed as a cam (4), **characterised in that**
- the component-side joining surface (5) and/or the shaft-side joining surface (6) partially have/has a predefined roughness (7) exclusively on load-critical regions,
- the load-critical regions are those regions on which increased normal forces act for the transmission of torques between the component (3) and the shaft (2).

2. Camshaft according to claim 1,
**characterised in that**
- the predefined roughness (7) is ca. 2 to 25 Rz, and/or
- the roughness is produced by means of a laser, mechanically, or by means of a chemical method.

3. Camshaft according to claim 1 or 2,
**characterised in that**
the cam-side joining surface (5) and/or the shaft-side joining surface (6) are roughened in the region of an associated cam lobe (14).

4. Camshaft according to claim 3,
**characterised in that**
the roughness (7) in the region of the cam lobe (14) extends over a circumferential angle of ca. 20° to 140° and in the opposite region over a circumferential angle of ca. 20° to 140°.

5. Camshaft according to any one of claims 1 to 4,
**characterised in that**
the component-side joining surface (5) and/or the shaft-side joining surface (6) is roughened at least partially, annularly on two axial edges spaced apart from one another.

6. Camshaft according to any one of claims 2 to 5,
**characterised in that**
- in particular the partial roughness (7) produced by means of a laser has ghost lines (9) that are aligned parallel, transversely or inclined to the camshaft axis (8), and/or
- the component-side joining surface (5) and the shaft-side joining surface (6) have a different roughness (7), in particular caused by a different laser power.

7. Camshaft according to claim 6,
**characterised in that**
the ghost lines (9) form a ghost pattern, in particular a check pattern, a rhombic pattern, a rectangular pattern or the like, wherein the individual ghost lines (9) are arranged at an angle of 0-90° with respect to the camshaft axis (8).

8. Camshaft according to any one of the preceding claims,
**characterised in that**
the at least one cam (4) is connected by means of a thermal joining fit to the camshaft (1), wherein the cam (4) is heated.

9. Camshaft according to any one of the preceding clams,
**characterised in that**
a structural element (16) is attached to the component (3), wherein component-side joining surfaces (5') are arranged on the component (3) and structural element-side joining surfaces (17) are arranged on the structural element (16), which in the case of the structural element (16) joined to the component (3) are in contact with one another, and wherein the component-side joining surface (5') and/or the structural element-side joining surface (17) have/has a predefined roughness (7) at least or exclusively partially on load-critical regions.

10. Camshaft according to claim 9,
**characterised in that**
the structural element (16) and the component (3) are joined to one another via a screw connection (19).

11. Camshaft according to claim 9 or 10,
**characterised in that**
the component-side joining surfaces (5, 5') and/or the shaft-side joining surface (6) and/or the structural element-side joining surface (17) is arranged on the front or circumferentially on the respective component.

12. Camshaft according to any one of the preceding claims, in particular according to any one of clams 9 to 11,
**characterised in that**
- the cam (4) is formed of a metal with a carbon content of at least 0.6 wt. %, whereas the shaft (2) has a smaller carbon content,
- the component-side joining surface (5, 5') and/or the structural element-side joining surface (17) and/or the shaft-side joining surface (6) have a roughness (7) produced and hardened by means of a laser (11), wherein the shaft (2) is hardened by means of the laser (11) before the roughness (7) is produced.

13. Camshaft according to claim 12,
**characterised in that**
- the roughness (7) produced and hardened by means of the laser (11) has a line (21) composed of individual laser points (20), wherein the central points (22) of the individual laser points (20) are offset with respect to one another and the individual laser points (20) are arranged overlapping one another, and/or
- the shaft (2) is formed from E335 steel and the cam (4) is formed from C60 or 100Cr6 steel.

14. Cam (4) for a camshaft (1), according to any one of claims 1 to 13.

15. Component according to claim 14,
**characterised in that**
- axially parallel ghost lines (9) are formed on the component-side joining surface (5) and/or on the shaft-side joining surface (7) in the manner of hardened slip lines (18) to facilitate installation, and/or
- the cam (4) and the component-side joining surfaces (5) are formed as internally rotated cam seats, whose ghost lines (9) are superimposed in the manner of laser structures.

16. Device (10) for the production of a camshaft (1) with a shaft (2) and at least one cam (4) attached thereto thermally or by means of a press fit, which is connected via a cam-side joining surface (5) to a shaft-side joining surface (6), with
- a feed device (13) for displacing the shaft (2),
- a holding and heating device (12) for heating the cam (4) and for fixing the latter during the installation procedure, **characterised by**
- a laser (11) for producing a partial roughness (7) in a load-critical region of the cam-side joining surface (5) and/or the shaft-side joining surface (6) immediately before slipping on the cam (4), wherein the load-critical regions are those regions on which increased normal forces act for the transmission of torques between the component (3) and the shaft (2).

17. Method for producing a camshaft (1) with a shaft (2) and at least one cam (4) joined thereto thermally or by means of a press fit, which is connected via a cam-side joining surface (5) to a shaft-side joining surface (7), in which
- a feed device (13) displaces the shaft (2),
- a holding and heating device (12) heats the cam (4) beforehand and fixes it during the installation procedure,
**characterised in that**
a laser (11) produces a partial roughness (7) in a load-critical region of the cam-side joining surface (5) and/or the shaft-side joining surface (7) immediately before the cam (4) is slipped on, wherein the load-critical regions are those regions on which increased normal forces act for the transmission of torques between the component (3) and the shaft (2).

## Revendications

1. Arbre à cames (1) pour un moteur à combustion interne avec un arbre (2) et au moins un élément structural (3) assemblé thermiquement ou par ajustement serré à celui-ci, qui est relié à une surface d'assemblage côté arbre (6) via une surface d'assemblage côté élément structural (5), dans lequel l'au moins un élément structural (3) est réalisé en tant que came (4),
**caractérisé en ce que**
- la surface d'assemblage côté élément structural (5) et/ou la surface d'assemblage côté arbre (6) présentent/présente partiellement une rugosité prédéfinie (7) exclusivement aux zones de charge critiques,
- les zones de charges critiques sont les zones sur lesquelles agissent des forces normales accrues pour la transmission de couples entre l'élément structural (3) et l'arbre (2).

2. Arbre à cames selon la revendication 1,
**caractérisé en ce**
- **que** la rugosité prédéfinie (7) est d'environ 2 à 25 Rz, et/ou
- **que** la rugosité est introduite par laser, mécaniquement ou par procédé chimique.

3. Arbre à cames selon la revendication 1 ou 2,
**caractérisé en ce**
**que** la surface d'assemblage côté came (5) et/ou la surface d'assemblage côté arbre (6) sont rendues rugueuses dans la zone d'une élévation de came (14) afférente.

4. Arbre à cames selon la revendication 3,
**caractérisé en ce**
**que** la rugosité (7) s'étend dans la zone de l'élévation de came (14) sur un angle périphérique d'environ 20° à 140° et dans la zone opposée sur un angle périphérique d'environ 20° à 140°.

5. Arbre à cames selon l'une quelconque des revendications 1 à 4,
**caractérisé en ce**
**que** la surface d'assemblage côté construction (5) et/ou la surface d'assemblage côté arbre (6) est rendue rugueuse au moins partiellement, de façon annulaire sur deux bords axiaux espacés l'un de l'autre.

6. Arbre à cames selon l'une quelconque des revendications 2 à 5,
**caractérisé en ce**
- **qu'**en particulier la rugosité partielle (7) introduite par laser présente des traces de traitement (9), qui sont orientées parallèlement, transversalement ou de manière oblique par rapport à l'axe d'arbre à cames (8) et/ou
- **que** la surface d'assemblage côté élément structural (5) et la surface d'assemblage côté arbre (6) présentent une rugosité (7) différente, causée en particulier par une puissance de laser différente.

7. Arbre à cames selon la revendication 6,
**caractérisé en ce**
**que** les traces de traitement (9) forment un motif de traitement, en particulier un motif à carreaux, un motif à losanges, un motif à rectangles, ou similaire, dans lequel les différentes traces de traitement (9) sont agencées selon un angle de 0-90° par rapport à l'axe d'arbre à cames (8).

8. Arbre à cames selon l'une quelconque des revendications précédentes,
**caractérisé en ce**
**que** l'au moins une came (4) est reliée à l'arbre à cames (1) par siège d'assemblage thermique, dans lequel la came (4) est chauffée.

9. Arbre à cames selon l'une quelconque des revendications précédentes,
**caractérisé en ce**
**qu'**un élément de construction (16) est attaché sur l'élément structural (3), dans lequel des surfaces d'assemblage côté élément structural (5') sont agencées sur l'élément structural (3) et des surfaces d'assemblage côté élément de construction (17) sont agencées sur l'élément de construction (16), qui sont en contact l'une avec l'autre au niveau de l'élément de construction (16) attaché à l'élément structural (3) et dans lequel la surface d'assemblage côté élément structural (5') et/ou la surface d'assemblage côté élément de construction (17) présentent/présente une rugosité prédéfinie (7) au moins ou exclusivement partiellement sur des zones de charges critiques.

10. Arbre à cames selon la revendication 9,
**caractérisé en ce**
**que** l'élément de construction (16) et l'élément structural (3) sont reliés l'un à l'autre par une liaison à vis (19).

11. Arbre à cames selon la revendication 9 ou 10,
**caractérisé en ce**
**que** les surfaces d'assemblage côté élément structural (5, 5') et/ou la surface d'assemblage côté arbre (6) et/ou la surface d'assemblage côté élément de construction (17) est agencée côté frontal ou côté périphérique sur le composant respectif.

12. Arbre à cames selon l'une quelconque des revendications précédentes, en particulier selon l'une quelconque des revendications 9 à 11,
**caractérisé en ce**
- **que** la came (4) est en un métal avec une part de carbone d'au moins 0,6 % en poids, alors que l'arbre (2) présente une part de carbone inférieure,
- **que** la surface d'assemblage côté élément structural (5, 5') et/ou la surface d'assemblage côté élément de construction (17) et/ou la surface d'assemblage côté arbre (6) présentent une rugosité (7) trempée et introduite par laser (11), dans lequel l'arbre (2) est trempé avant l'introduction de la rugosité (7) par laser (11).

13. Arbre à cames selon la revendication 12,
**caractérisé en ce**
- **que** la rugosité (7) trempée et introduite par laser (11) présente une trace (21) composée de différents points laser (20), dans lequel les points médians (22) des différents points laser (20) sont décalés l'un par rapport à l'autre et les différents points laser (20) sont agencés en se superposant l'un l'autre, et/ou
- **que** l'arbre (2) est en acier E335 et les cames (4) sont en acier C60 ou 100Cr6.

14. Came (4) pour un arbre à cames (1), selon l'une quelconque des revendications 1 à 13.

15. Arbre à cames selon la revendication 14,
**caractérisé en ce**
- **que** des traces de traitement (9) axialement parallèles du type traces de glissement trempées (18) sont introduites sur la surface d'assemblage côté élément structural (5) et/ou sur la surface d'assemblage côté arbre (7) pour faciliter le montage, et/ou
- **que** les cames (4) et les surfaces d'assemblage côté élément structural (5) sont réalisées en tant que sièges de came tournés à l'intérieur, dont les traces de traitement (9) sont superposées à la manière de structures laser.

16. Dispositif (10) de production d'un arbre à cames (1) avec un arbre (2) et au moins une came (4) assemblée thermiquement ou par ajustement serré à celui-ci, qui est reliée à une surface d'assemblage côté arbre (6) via une surface d'assemblage côté came (5), avec
- un dispositif d'avance (13) pour le déplacement de l'arbre (2),
- un dispositif de maintien et de chauffage (12) pour le chauffage de la came (4) et pour la fixation de celle-ci pendant le montage,
**caractérisé par**
- un laser (11) pour l'introduction d'une rugosité partielle (7) dans une zone de charges critiques de la surface d'assemblage côté came (5) et/ou de la surface d'assemblage côté arbre (6) directement avant la mise en place des cames (4), dans lequel les zones de charges critiques sont les zones sur lesquelles agissent des forces normales accrues pour la transmission de couples entre l'élément structural (3) et l'arbre (2).

17. Procédé de production d'un arbre à cames (1) avec un arbre (2) et au moins une came (4) assemblée thermiquement ou par ajustement serré à celui-ci, qui est reliée à une surface d'assemblage côté arbre (7) via une surface d'assemblage côté came (5), dans lequel
- un dispositif d'avance (13) déplace l'arbre (2),
- un dispositif de maintien et de chauffage (12) chauffe la came (4) au préalable et la fixe pendant le montage,
**caractérisé en ce**
**qu'**un laser (11) introduit une rugosité partielle (7) dans une zone de charges critiques de la surface d'assemblage côté came (5) et/ou de la surface d'assemblage côté arbre (7) directement avant la mise en place des cames (4), dans lequel les zones de charges critiques sont les zones sur lesquelles agissent des forces normales accrues pour la transmission de couples entre l'élément structural (3) et l'arbre (2).
